# EUROPEAN PATENT APPLICATION

(11) **EP 1 406 405 A1**
(43) Date of publication of application: **07.04.2004**
(21) Application number: 02292447.6
(22) Date of filing: 04.10.2002
(51) Int. Cl.: H04L 1/00, H04L 27/34

(54) **System and method for adaptive modulation based on channel estimates and capacity requirements**

(71) Applicant: ALCATEL, 75008 Paris (FR)
(72) Inventor: Frecassetti, Mario Giovanni, 24128 Bergamo (IT); Colombo, Claudio, 20046 Biassono (Milano) (IT); Angeloni, Teresio Ferruccio, 20090 Vimodrone (Milano) (IT); Valtolina, Roberto, 20056 Trezzo sull'Adda (Milano) (IT); Pellizzoni, Roberto, 22063 Cantù (Como) (IT)
(74) Representative: Lamoureux, Bernard

(57) **Abstract**

Disclosed herewith is an adaptive point-to-point wireless telecommunication system. The system comprises a transmitter and a receiver, the transmitter comprising a modulator, the receiver comprising a demodulator. The system is characterized in that the modulator is a variable modulator and the demodulator is a variable demodulator for changing the modulation costellation/level in response to possible disturbs in the radio channel and/or changes of transmission capacity requirements. Preferably, the modulation is QAM and the system operates at high and very high frequencies.

## Description

The present invention generally relates to transmission of signals through radio-relay systems. In particular, the present invention relates to an adaptive wireless telecommunication system and a corresponding method.

As a man skilled in the art of radio systems knows, the transmission frequency plans are of three main categories. The lower frequencies (for instance ranging from 18 to 55 GHz) are those fully licensed; the intermediate frequencies (less than 60 GHz) are presently unlicensed; finally, the higher frequencies (higher than 60 GHz) are, at present, fully uncoordinated.

The American FCC and the European ITU-R standardization bodies are both trying to define clear rules for exploiting the frequency bands that are presently uncorrelated, 71-76 GHz and 81-86 GHz, respectively. These bands could be profitably used for transmitting GbitEthernet signals by an ON/OFF modulation.

In addition, as far as the modulation techniques are concerned, the general opinion about QAM (Quadrature Amplitude Modulation) is that it is complicated at low frequencies but it becomes almost unpracticable at higher frequencies. In other words, most of the technicians are convinced that, at frequencies over 60 GHz, small variations of atmospheric conditions can lead to amplitute variations.

The main object of the present invention is providing an adaptive wireless telecommunication system and method for radio point-to-point transmitting signals.

A further object of the present invention is profitably exploiting the so far uncoordinated high frequency bands, say the frequency bands over 60 GHz.

This and further objects are obtained by a system having the features set forth in the independent claim 1 and by a method comprising the steps of independent claim 9. Further advantageous characteristics of the present invention are set forth in the respective dependemt claims. All the claims are considered as an integral part of the present description.

The basic idea of the present invention is to provide a system dynamically changing the modulation level according to both capacity requirements and radio channel conditions.

The present invention will become clear from the following detailed description of a preferred embodiment, to be considered as exemplifying and not limiting of the invention itself, to be read with reference to the attached figures wherein:
- Fig. 1 shows in a schematic way a possible embodiment of TX side of the system according to the present invention;
- Fig. 2 shows, in a schematic way, a possible embodiment of RX side of the system according to the present invention;
- Fig. 3 shows a graph of availability vs. the path length of a link at 30 GHz using different modulation formats; and
- Fig. 4 is a table listing various QAM modulation levels and exemplifying corresponding transmission bit-rate (the bit-rate figures are indicative only).

Before starting with a detailed description of the invention, it is useful to point out that, while it is given with reference to QAM modulation only, it is equally applicable to other similar modulation techniques or different code schemes (for instance BCH, TCM, MLC and others).

Preferably. the present invention utilizes channels that are highly spaced, for instance 200-330 MHz spaced, preferably 240-300 MHz spaced and more preferably about 280 MHz spaced. As, at the low frequencies the channels are more reduced, multiple channels should be used. On the contrary, at high and ultra high frequencies, the available bandwidth has not yet been divided and thus so large channels could be provided.

Just with the purpose to provide an example, let's suppose to consider a high bandwidth, say 71-75,5 GHz. The available bandwidth is divided into a number of sets. For instance, the 71-75,5 bandwidth could be divided into about 280 MHz sets, resulting in about 15 channels.

It is known that the information capacity which could be transmitted is strictly related to the modulation level that is used. If the transmission is performed at the lower QAM modulation level (4 QAM), only about 300-350 Mb/s could be transmitted. The advantage of a low level modulation is a robust system against any possible event affecting the channel (typically, atmospheric conditions).

A higher QAM modulation level provides that a larger amount of information can be transmitted (64 QAM corresponds to around 1000-1100 Mb/s) in the same channel but results in a critical system (less robust against weather condition changes). The risk, in case of bad weather conditions and high modulation level, is to have the wireless channel interrupted.

Tipically, the present telecommunication systems have the need to transmit a large amount of information but, as said above, this is a critical task for wireless telecommunication systems that are always faced with channel disturbs.

According to the present invention an adaptive system is provided. Such an adaptive system adapts itself according to the channel capacity or as a function of the propagation conditions. In other words, a variable capacity "flow tube" which dynamically adapts to the various conditions is provided.

According to the present invention, at the transmitter side of the system a variable modulator is provided and, correspondingly, a variable demodulator is provided at the receiver side. The variable modulator and demodulator are in connection one with each other for increasing the TX modulation level in case of increase of transmission requirements and decreasing the modulation level in case of a disturbed channel or for increasing the availability figures.

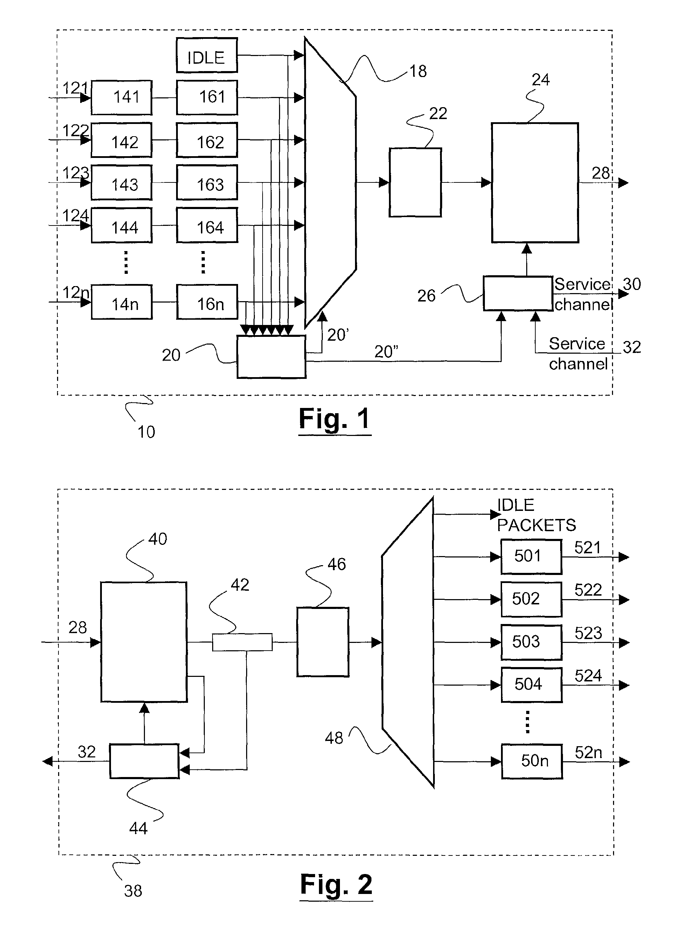

Reference is made to Fig. 1 showing the TX side of an embodiment of the system according to the present invention. The transmitter 10 of Fig. 1 comprises: a number of input interfaces 141-14n receiving corresponding signals 121-12n to be wireless transmitted; a number of queue blocks 161-16n for queueing the received signals; a scheduler and dispatcher block 18 receiving the queues of input signals; a mapper 22 receiving the output from the scheduler and dispatcher block 18; and a variable modulator 24 selecting one of a number of available modulation levels. The variable modulator 24 receives the output from the mapper 22 and emits the signal 28 to be wireless transmitted.

The output from the queue blocks 161-16n is also provided to a logic block 20 connected to a modulation changer block 26, properly instructing the variable modulator 24, and to the scheduler and dispatcher block 18. The modulation changer block 26 is also respondent to information 32 provided from the receiver side of the system and primarily relating to weather conditions and corresponding possible degrade of the transmission channel. Advantageously, such information 32 are transmitted through a proper service channel.

In turn, the modulation changer 26 provides information 30 about the selected transmission modulation to the receiver side, possibly through a proper service channel.

The RX side of an embodiment of the system according to the present invention is shown in Fig. 2. Correspondingly to the transmitter, the receiver 38 comprises: a variable demodulator 40 demodulating the received signal 28; a demapper 46; a dispatcher 48 receiving the output from the demapper 46; and a number of output interfaces 502-50n outputting the signals 521-52n originally received at the transmitter and that have been transmitted through the air.

The receiver further comprises means 42 for extracting the transmitted modulation information from the service channel. Such extracted modulation information are provided to a modulation changer block 44 for changing the modulation in the demodulator. Finally, a further block is provided for inserting a remote error indication in the service channel. Such a further block provides its output to the modulation changer block 44.

Let's suppose to set the system at 32 QAM modulation level because the required maximum capacity is equal to or lower than about 800-850 Mb/s. The maximum capacity is given, for instance, by three input signal interfaces (which could be of different nature).

Starting from such a steady situation, various different situations could occur: an increase/decrease of the required maximum capacity, a degradation of the channel or both. In the first case, the modulation level should be increased (to 64 or 128 QAM). In the second case, there is the need of a more robust system.

In detail, if the system should transmit also signals from one or more additional sources (input signal interfaces ...), the system capacity should be increased. Such a situation is detected by the logic block instructing the variable modulator as to change the modulation scheme to 64 or 128 QAM (the capacity becomes higher than 1000 Mb/s). In case the radio channel becomes affected by noise, the modulation level should be set lower (32, 16 or even 4 QAM) so that a more robust system is obtained.

The man skilled in the art will realize that the switch to a lower modulation scheme results in a lower capacity of transmitting information. Thus, the need arises to select the signals that should be transmitted (high priority signals) and those which will be lost (low priority signals). Such a selection is performed by the logic block.

Starting again from a steady situation (transmission at 32 QAM, capacity to be transmitted being lower than around 800 Mb/s, good weather conditions), there could be a change of weather conditions resulting in an interruption of the radio link. Through the present invention, in case of a disturbed radio channel because of the weather, there is the option to reduce the modulation level to 16 or 4 QAM, thus obtaining a more robust system against weather disturbs. The degrade of the radio channel is reported back from the receiver to the transmitter through the proper service channel.

Upon the disturb in the channel has been removed (the weather conditions have become better), the modulation level could be switched back to the starting one (32 QAM).

Anytime the modulation level is changed by the modulation changer block, the new modulation which is set will be reported to the variable demodulator at the receiver.

While the present invention could be used for transmitting signals from a single source, it is profitably used for transmitting signals from a plurality of different interfaces in a defined radio frequency bandwidth using a multiple channel occupation range.

The queues of the input data interfaces are processed in the scheduler and dispatched in the mapper, for instance a GFP (Generic Framing Procedure) mapper, before being modulated in the variable QAM modulator providing a variable constellation format.

The use of GFP protocol (as described in ITU-T Rec. G.7041) is chosen to delineate octet-aligned, variable-length payloads from higher-level client signals for subsequent mapping into octet-synchronous paths. GFP provides a generic mechanism to adapt traffic from higher-layer client signals over a transport network. Client signals may be PDU-oriented (such as IP or Ethernet), block-code oriented constant bit rate stream (Fibre Channel or ESCON).

As said above, the choice of modulation format depends from the total capacity required at a certain instant by the client sources: the dynamically constellation switching permits to offer a greater available bandwidth (when required) with the same frequency channel occupation.

In RX-side, the adaptive modulation scheme is used as countermeasure against fading situations during the propagation activity: when the radio channel is becoming unavailable for noise conditions on the link, the system will change the level of the signal constellation decreasing the modulation format. In this case the radio channel will work with a higher threshold margin respect to the previous state, reducing the total transmitting capacity until the noise conditions on the channel will be removed.

The best radio frequency application of the proposed solution could be identified in the unlicensed bandwidth (reserved for fixed services) as 59-64 GHz or 70 GHz, where the channel arrangement is not yet defined and wide channels could be arranged. In any case, the traditional channel plans reserved for "short haul" application as 18 GHz to 58 GHz, using a defined number of adjacent frequency channels (for example n-channels at 28 MHz) could be equally profitably used.

The maximum hop length possible in any frequency band is mainly determined by: characteristic of radio equipment (noise figure, transmitter out power etc.), modulations format (4, 16, 32, 64 and 128 QAM), payload rate (in Mb/s), and propagation availability (in %).

Given the radio equipment characteristic, chosen the maximum figure of radio channel interface (M-RIC) and then the radio bandwidth channel and having fixed a compatible length of path, it is possible to perform, during the deployment of the systems or in adaptive way, a trade off between the format modulations and the event of radio outage.

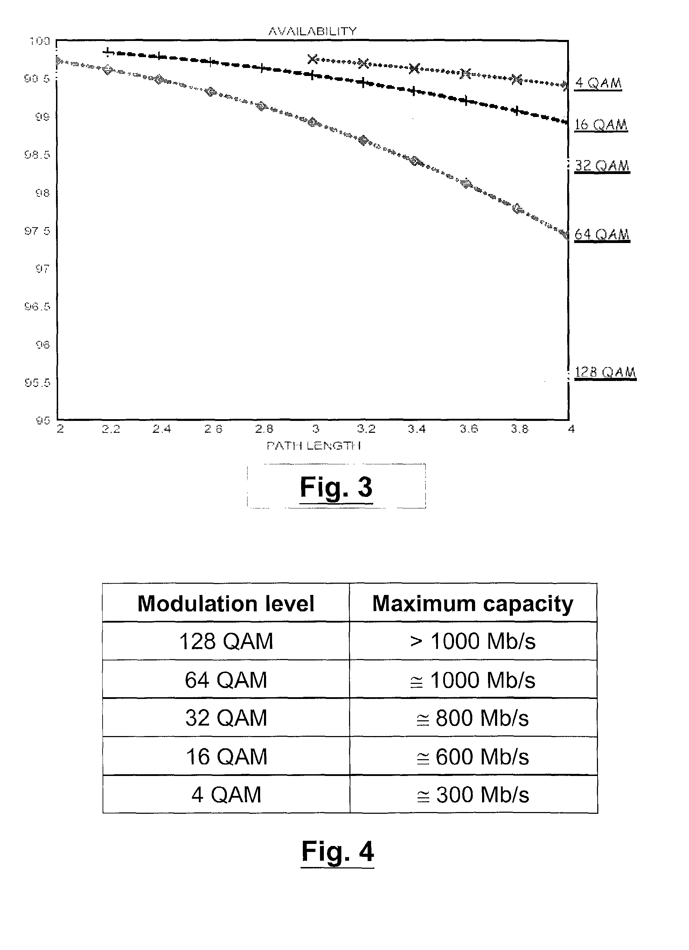

In Fig. 3 the availability vs. the path length (in Km) of a link at 30 GHz is depicted using 4QAM, 16QAM, 32QAM, 64QAM and 128 QAM modulation format. For a 3 Km path, with 4QAM modulation, the availability is around 99.75% with an 215 Mb/s of radio capacity. With 128 QAM format, the availability is reduced to 98.1%, but the capacity is 1084Mb/s. For instance it is possible to chose a 2 Km of path with more than 95.6% of availability with the full capacity.

The object of the present solution is also to take advantage of the statistical nature of data interfaces, like 10/100 Ethernet, Fast-Ethernet and so on, in addition to the uncorrelated nature of the channel radio outage and the level of the data traffic to reach, in a sort of resilience, the desired availability.

In other words the relation between the payload capacity and the availability of the system take advantage of the cross correlation between two un-correlated events, the first one is the instantaneous level of the payload that required, in order to be transmit into a chosen bandwidth RF channel, a certain level of modulation, and the second one is the condition of propagation RF channel that required a certain level of modulations to maintain the Target Outage.

This automatic modulation control is driven by the far-end power level received or other quality indicator (taking into account the radio channel propagations conditions) and the "measure" of the input traffic total capacity.

There have thus been shown and described a novel system and a novel method which fulfill all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the spirit and scope of the invention are deemed to be covered by the invention which is limited only by the claims which follow.

## Claims

1. Adaptive point-to-point wireless telecommunication system comprising a transmitter (10) and a receiver (38), the transmitter (10) comprising a modulator (24), the receiver (38) comprising a demodulator (40), **characterized in that** the modulator (24) is a variable modulator and the demodulator (40) is a variable demodulator for changing the modulation costellation/level in response to possible degrades and/or disturbs in the radio channel and/or changes of transmission capacity requirements.

2. System according to claim 1, **characterized in that** the modulator (24) and the demodulator (40) operate according to a Quadrature Amplitude Modulation (QAM) scheme.

3. System according to claim 1, **characterized in that** a service radio channel is provided for transmitting information (30) about a changed modulation level to the receiver (10) and for transmitting back to the transmitter information (32) about possible disturbs affecting the radio channel.

4. System according to claim 1, **characterized in that** the frequency of operation is between 50 and 90 GHz, preferably between 70 and 90 GHz, more preferably between 71 and 75,5 GHz or 71-81-86 GHz.

5. System according to claim 4, **characterized in that** the frequency bandwidth is divided into channels, the channels being 200-330 MHz spaced, preferably about 240 or 280 MHz spaced.

6. System according to claim 1, **characterized in that** the transmitter (10) further comprises:
a number of input interfaces (141-14n) receiving respective signals (121-12n) to be transmitted;
a scheduler and dispatcher block (18) receiving the signals from the input interfaces (141-14n);
a mapper block (22) fed by the output of the scheduler and dispatcher block (18) and in turn feeding the variable modulator (24); and
logic means (20) respondent to the signals to be transmitted and driving the variable modulator (24, 26) for changing the modulation level according to detected varying capacity requirements.

7. System according to claim 1, **characterized in that** the receiver (38) further comprises:
means (42) for estracting information from a service channel, such information comprising indication of the transmission modulation level;
a de-mapper block (46) fed by the output of the variable demodulator;
a dispatcher block (48) fed by the output of the de-mapper;
a number of output interfaces (501-50n) receiving respective signals to be outputted by the dispatcher block, the demodulation level in the demodulator being changed according to the transmission modulation level and any possible detected alarm inserted in the service channel

8. System according to claim 6 or 7, **characterized in that** the mapper and the demapper operate according to the Generic Framing Procedure standard.

9. Method for point-to-point radio transmitting signals through an adaptive point-to-point wireless telecommunication system, the method comprising the step of providing a transmitter (10) with a modulator (24) and a receiver (38) with a demodulator (40), **characterized by** the step of changing the modulation costellation/level in both the modulator (24) and demodulator (40) in response to possible disturbs and/or degrades in the radio channel and/or changes of transmission capacity requirements.

10. Method according to claim 9, **characterized by** operating the modulator (24) and the demodulator (40) according to a Quadrature Amplitude Modulation (QAM) scheme.

11. Method according to claim 9, **characterized by** providing a service radio channel for transmitting information (30) about a changed modulation level to the receiver (38) and for transmitting back to the transmitter (10) information (32) about possible disturbs/degrades affecting the radio channel.

12. Method according to claim 9, **characterized in that** the frequency of operation is between 50 and 90 GHz, preferably between 70 and 90 GHz, more preferably between 71 and 75,5 GHz or 71-81-86 GHz.

13. Method according to claim 12, **characterized in that** the frequency bandwidth is divided into channels, the channels being 200-300 MHz spaced, preferably 240 or 280 MHz spaced.

14. Method according to claim 9, wherein the signals to be transmitted are from a number of different sources and **characterized by** the step of assigning a priority to the different source signals so that, in case the selected modulation level does not allow to transport the signals from all the sorces, only higher priority signals are transmitted.
